(19)

Europäisches
Patentamt
European
Patent Office
Office européen
des brevets

(11)  **EP 3 726 772 A1**

(12)  **EUROPEAN PATENT APPLICATION**
published in accordance with Art. 153(4) EPC

(43) Date of publication:
**21.10.2020  Bulletin 2020/43**

(51) Int Cl.:
***H04L 9/30*** (2006.01)

(21) Application number: **18888199.9**

(22) Date of filing: **10.12.2018**

(86) International application number:
**PCT/KR2018/015617**

(87) International publication number:
**WO 2019/117565 (20.06.2019 Gazette 2019/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.12.2017  KR 20170169558**

(71) Applicant: **Kookmin University Industry Academy
Cooperation Foundation
Seoul 02707 (KR)**

(72) Inventors:
• **SIM, Bo Yeon
  Goyang-si, Gyeonggi-do 10303 (KR)**
• **HAN, Dong Guk
  Seoul 01723 (KR)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54)  **APPARATUS AND METHOD FOR RANDOMIZING KEY BIT VARIABLES OF PUBLIC KEY
ENCRYPTION ALGORITHM**

(57)    The present invention relates to an apparatus
and a method for randomizing key bit variables of a public
key encryption algorithm, the apparatus and the method
performing initialization with a random value each time
before the start of a repetitive operation for confirming a
secret key bit value, and masking an n-bit secret key with
an n-bit random value, thereby resolving the vulnerability
of the public key encryption algorithm. The apparatus
comprises: an information confirmation unit for confirm-
ing information on a chip in which the encryption algo-
rithm operates; an encryption algorithm determination
unit for determining a method implementing the encryp-
tion algorithm; a hardware countermeasure processing
unit for initializing the secret key bit value with the random
value each time before the start of the repetitive operation
for confirming the secret key bit value when the encryp-
tion algorithm is implemented in hardware; and a soft-
ware countermeasure processing unit for masking the
secret key bit value with the random value in a step before
starting the repetitive operation for confirming the secret
key bit value when the encryption algorithm is implement-
ed in software.

FIG. 8

**Description**

TECHNICAL FIELD

The present disclosure relates to coping with side-channel analysis, and more particularly, to an apparatus and method for randomizing key bit variables of a public-key cryptosystem that may resolve a vulnerability of a public-key cryptosystem by initializing a secret key bit value to a random value each time before starting a repetitive operation for checking the secret key bit value and by masking an n-bit secret key with an n-bit random value.

RELATED ART

In general, a Rivest-Shamir-Adleman (RSA) algorithm, which is a key algorithm of accredited certificate systems used for many electronic transactions, such as Internet banking and Internet stock trading, and an Elliptic Curve Cryptography (ECC) algorithm of which a need is on the increase due to its suitability suitable for an embedded platform, such as an electronic passport, a User Subscriber Identity Module (USIM), a smart card, and a smart car, are vulnerable to side-channel analysis attacks.

Such side-channel analysis (SCA) refers to a physical attack using side-channel information occurring while a cryptographic algorithm is running on a secure device.

Side-channel analysis, as an analysis technique first proposed by Paul Kocher in 1996, is an analysis technique that finds a key using physical information exposed when a cryptographic device performs a cryptographic algorithm.

Among such side-channel analysis attacks, a power analysis attack that observes a power pattern consumed during performing of a cryptographic algorithm and uses the same for analysis is most robust and, as a representative example, includes simple power analysis (SPA) and differential power analysis (DPA).

In addition, there is a collision attack (CA). The collision attack is a very robust attack technique that may find a secret key value using one or more simple traces even for a public-key cryptosystem, such as RSA and ECC, designed to be secure for SPA and DPA.

Although countermeasures proposed so far are applied to securely design a cryptosystem, such as RSA and ECC, for side-channel analysis, there is a vulnerability in that all of n-bit secret key bits may be easily recovered using a cryptographic algorithm operation trace.

Therefore, there is a need for research and development on a secure public-key cryptosystem capable of coping with the above issue.

That is, unlike the past in which the security of an information protection device relies on the mathematical security of an installed cryptographic algorithm, it is essential to design separate secure countermeasures due to presence of physical vulnerability by a side-channel analysis attack.

[Prior Art Document]

[Patent Document]

(Patent Document 1) Korean Registered Patent NO. 10-0891323

DETAILED DESCRIPTION

TECHNICAL SUBJECT

The present disclosure is to solve technical issues corresponding to side-channel analysis of a conventional public-key cryptosystem and provides an apparatus and method for randomizing key bit variables of a public-key cryptosystem that may overcome a vulnerability of the public-key cryptosystem by initializing a random key bit value to a random value each time before starting a repetitive operation for checking the secret key bit value and by masking an n-bit secret key with an n-bit random value.

The present disclosure provides an apparatus and method for randomizing key bit variables of a public-key cryptosystem that may overcome a vulnerability of the public-key cryptosystem by initializing a secret key bit value to a random value each time before starting a repetitive operation for checking the secret key bit value at a cryptographic algorithm hardware implementation.

The present disclosure provides an apparatus and method for randomizing key bit variables of a public-key cryptosystem that may overcome a vulnerability of the public-key cryptosystem by masking a secret key bit value with a random value in a step before performing a repetitive operation for checking the secret key bit value at a cryptographic algorithm software implementation.

The present disclosure provides an apparatus and method for randomizing key bit variables of a public-key cryptosystem that may improve a determination accuracy by determining whether the same equipment as an attacking target is available in a step of determining a vulnerability of a hardware and software implemented cryptographic algorithm and by determining the vulnerability of the cryptographic algorithm distinguishably depending on whether the same equipment is available.

Objects of the present disclosure are not limited to the aforementioned objects and other objects not described herein may be clearly understood by those skilled in the art from the following description.

SOLUTION

To achieve the aforementioned objects, an apparatus for randomizing key bit variables of a public-key cryptosystem according to the present disclosure includes an information checker configured to check information on a chip in which a cryptographic algorithm operates, a cryptographic algorithm determiner configured to determine an implementation method of the cryptographic algorithm, a hardware countermeasure processing configured to initialize a secrete key bit value to a random value each time before starting a repetitive operation for checking the secret key bit value at a cryptographic algorithm hardware implementation, and a software countermeasure processing configured to mask the secret key bit value with the random value in a step before performing the repetitive operation for checking the secret key bit value at a cryptographic algorithm software implementation.

Here, the hardware countermeasure processing may be configured to eliminate a vulnerability by removing a property that power consumption according to a Hamming distance, $k_{i+1} \oplus k_i$ value, between $k_{i+1}$ and $k_i$ ($0 \leq i < n-1$) occurs in a step of checking a secret key bit $k_i$ value at the cryptographic algorithm hardware implementation and a property that power consumption according to a Hamming distance, $k_{i+1} \oplus k_i$ value, between ki+i and $k_i$ ($0 \leq i < n-1$) occurs in a step of checking a secret key bit $k_i$ value at the cryptographic algorithm hardware implementation and power consumption according to a Hamming distance between register addresses used for an operation occurs since an address of a register R called for the repetitive operation is determined based on $k_{i+1}$ and $k_i$ values, and by randomly classifying power trace properties into two groups regardless of a property according to a secret key bit value.

The software countermeasure processing may be configured to eliminate a vulnerability by removing a property that power consumption according to a Hamming weight value that is a number of 1s when $k_i$ value ($0 \leq i < n-1$) is represented as a binary number occurs in a step of checking a secret key bit $k_i$ value at the cryptographic algorithm software implementation and a property that power consumption according to a Hamming weight value that is a number of 1s when $k_i$ value ($0 \leq i < n-1$) is represented as a binary number occurs in a step of checking a secret key bit $k_i$ value at the cryptographic algorithm software implementation and power consumption according to a Hamming weight value that is a number of 1s when a register address used for an operation is represented as a binary number occurs since an address of a register R called for the repetitive operation is determined based on $k_i$ value, and by randomly classifying power trace properties into two groups regardless of a property according to a secret key bit value.

The hardware countermeasure processing may include a vulnerability determiner configured to determine a vulnerability of the hardware implemented cryptographic algorithm, a random initializer configured to initialize the secret key bit value to the random value before starting the repetitive operation for checking the secret key bit value by applying hardware implemented countermeasures, a power trace collector configured to collect a power trace occurring in response to executing the public-key cryptosystem once, an operation unit and location selector configured to cut the power trace collected in response to executing the cryptographic algorithm once based on a unit of n repetitive operations, to select an operation location for a key bit check, and to perform n repetitive operations, and a security determiner configured to determine whether n power traces are classifiable into two groups according to a value and to determine that the vulnerability is eliminated if unclassified.

The software countermeasure processing may include a vulnerability determiner configured to determine a vulnerability of the software implemented cryptographic algorithm, a random bit masker configured to perform a random bit masking by applying software implemented countermeasures, a power trace collector configured to collect a power trace occurring in response to executing the public-key cryptosystem once, an operation unit and location selector configured to cut the power trace collected in response to executing the cryptographic algorithm once based on a unit of n repetitive operations, to select an operation location for a key bit check, and to perform n repetitive operations, and a security determiner configured to determine whether n power traces are classifiable into two groups according to a value and to determine that the vulnerability is eliminated if unclassified.

To achieve other objects, a method of randomizing key bit variables of a public-key cryptosystem according to the present disclosure includes checking information on a chip in which a cryptographic algorithm operates, determining an implementation method of the cryptographic algorithm, and processing a hardware countermeasure of initializing a secrete key bit value to a random value each time before starting a repetitive operation for checking the secret key bit value at a cryptographic algorithm hardware implementation if the cryptographic algorithm is implemented on hardware, and processing a software countermeasure of masking the secret key bit value with the random value in a step before performing the repetitive operation for checking the secret key bit value at a cryptographic algorithm software implementation if the cryptographic algorithm is implemented on software.

Here, if the cryptographic algorithm is implemented on hardware, the processing may include determining a vulnerability of the hardware implemented cryptographic algorithm, initializing the secret key bit value to the random value before starting the repetitive operation for checking the secret key bit value by applying hardware implemented countermeasures, collecting a power trace occurring in response to executing the public-key cryptosystem once, cutting the power trace collected in response to executing the cryptographic algorithm once based on a unit of n repetitive operations, selecting an operation location for a key bit check, and performing n repetitive operations, and determining whether n power traces are classifiable into two groups according to a value and determining that the vulnerability is eliminated if unclassified.

If the cryptographic algorithm is implemented on software, the processing may include determining a vulnerability of the software implemented cryptographic algorithm, performing a random bit masking by applying software implemented countermeasures, collecting a power trace occurring in response to executing the public-key cryptosystem once, cutting the power trace collected in response to executing the cryptographic algorithm once based on a unit of n repetitive operations, selecting an operation location for a key bit check, and performing n repetitive operations, and determining whether n power traces are classifiable into two groups according to a value and determining that the vulnerability is eliminated if unclassified.

The processing of the hardware countermeasure of initializing the secret key bit value to the random value each time before starting the repetitive operation may include eliminating a vulnerability by removing a property that power consumption according to a Hamming distance, $k_{i+1} \oplus k_i$ value, between $k_i + i$ and $k_i$ ($0 \leq i < n-1$) occurs in a step of checking a secret key bit $k_i$ value at the cryptographic algorithm hardware implementation and a property that power consumption according to a Hamming distance, $k_{i+1} \oplus k_i$ value, between $k_{i+1}$ and $k_i$ ($0 \leq i < n-1$) occurs in a step of checking a secret key bit $k_i$ value at the cryptographic algorithm hardware implementation and power consumption according to a Hamming distance between register addresses used for an operation occurs since an address of a register R called for the repetitive operation is determined based on $k_{i+1}$ and $k_i$ values, and by randomly classifying power trace properties into two groups regardless of a property according to a secret key bit value.

The processing of the software countermeasure of masking the secret key bit value with the random value may include eliminating a vulnerability by removing a property that power consumption according to a Hamming weight value that is a number of 1s when $k_i$ value ($0 \leq i < n-1$) is represented as a binary number occurs in a step of checking a secret key bit $k_i$ value at the cryptographic algorithm software implementation and a property that power consumption according to a Hamming weight value that is a number of 1s when a $k_i$ value ($0 \leq i < n-1$) is represented as a binary number occurs in a step of checking a secret key bit $k_i$ value at the cryptographic algorithm software implementation and power consumption according to a Hamming weight value that is a number of 1 s when a register address used for an operation is represented as a binary number occurs since an address of a register R called for the repetitive operation is determined based on $k_i$ value, and by randomly classifying power trace properties into two groups regardless of a property according to a secret key bit value.

The determining the vulnerability of the hardware and software implemented cryptographic algorithm may include, if the same equipment as an attacking target is available, setting an n-bit secret key in the same equipment as the attacking target and then collecting the power trace occurring in response to executing the public-key cryptosystem once, cutting the power trace collected in response to executing the cryptographic algorithm once based on the unit of n repetitive operations and classifying n power traces into two groups based on the set n-bit key, and calculating SOST values of the classified two groups and determining whether an SOST peak value is present.

The determining the vulnerability of the hardware and software implemented cryptographic algorithm may include, if the same equipment as an attacking target is unavailable, collecting the power trace occurring in response to executing the public-key cryptosystem once in an attacking target equipment, cutting the power trace collected in response to executing the cryptographic algorithm once based on a unit of n repetitive operations and distinguishing an operation for a key bit check by checking an operating frequency of an attacking target chip and analyzing an algorithm structure; and determining whether the n power traces are classifiable into two groups according to a secret key bit value $k_i$.

EFFECTS

An apparatus and method for randomizing key bit variables of a public-key cryptosystem according to the present disclosure have the following effects:

First, it is possible to improve the security of side-channel analysis for a public-key system based on cryptographic algorithms, such as, for example, Rivest-Shamir-Adleman (RSA) and Elliptic Curve Cryptography (ECC).
Second, it is possible to overcome a vulnerability of a public-key cryptosystem by initializing a secret key bit value to a random value each time before starting a repetitive operation for checking the secret key bit value at a cryptographic algorithm hardware implementation.

Third, it is possible to overcome a vulnerability of a public-key cryptosystem by masking a secret key bit value with a random value in a step before performing a repetitive operation for checking the secret key bit value at a cryptographic algorithm software implementation.

Fourth, it is possible to improve a determination accuracy by determining whether the same equipment as an attacking target is available in a step of determining a vulnerability of a hardware and software implemented cryptographic algorithm and by determining the vulnerability of the cryptographic algorithm distinguishably depending on whether the same equipment is available.

Fifth, based on an aspect that an RSA algorithm is used for an accredited certificate and an ECC algorithm is used for an electronic passport and a smart car, the present disclosure may usefully apply to institutions of designing side-channel countermeasures of domestic/foreign accredited certificates, electronic passports, and smart cards, and institutions of performing side-channel security check.

BRIEF DESCRIPTION OF DRAWINGS

FIG. 1 illustrates a configuration of a Scalar multiplication algorithm.

FIG. 2 illustrates classification graphs in which power traces for repetitive operations at hardware implementation are classified based on properties.

FIG. 3 illustrates classification graphs in which power traces for repetitive operations at software implementation are classified based on properties.

FIG. 4 illustrates a configuration of random value initialization by hardware implementation.

FIG. 5 illustrates countermeasure result graphs implemented by hardware.

FIG. 6 illustrates a configuration of random bit masking by software implementation.

FIG. 7 illustrates countermeasure result graphs implemented by software.

FIG. 8 is a diagram illustrating a configuration of an apparatus for randomizing key bit variables of a public-key cryptosystem according to the present disclosure.

FIG. 9 is a flowchart illustrating a method of randomizing key bit variables of a public-key cryptosystem according to the present disclosure.

FIG. 10 is a graph showing a hardware power trace and a repetitive operation unit.

FIG. 11 is a flowchart illustrating a process of determining a vulnerability of a hardware and software implemented cryptographic algorithm.

BEST MODE

Hereinafter, example embodiments of an apparatus and method for randomizing key bit variables of a public-key cryptosystem according to the present disclosure are described.

Features and advantages of an apparatus and method for randomizing key bit variables of a public-key cryptosystem according to the present disclosure may become apparent through the following description about each embodiment.

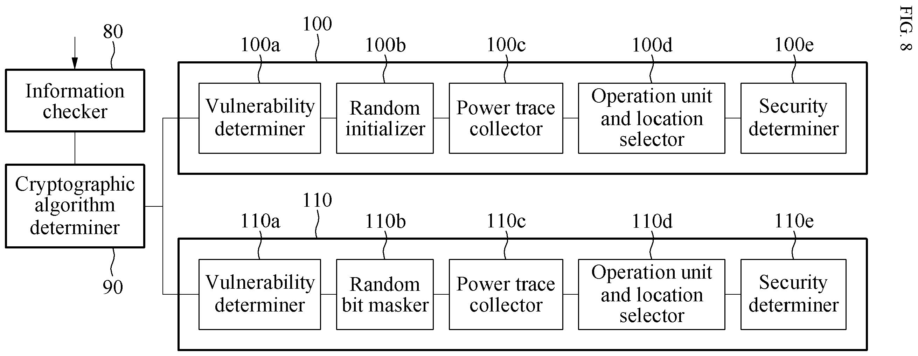

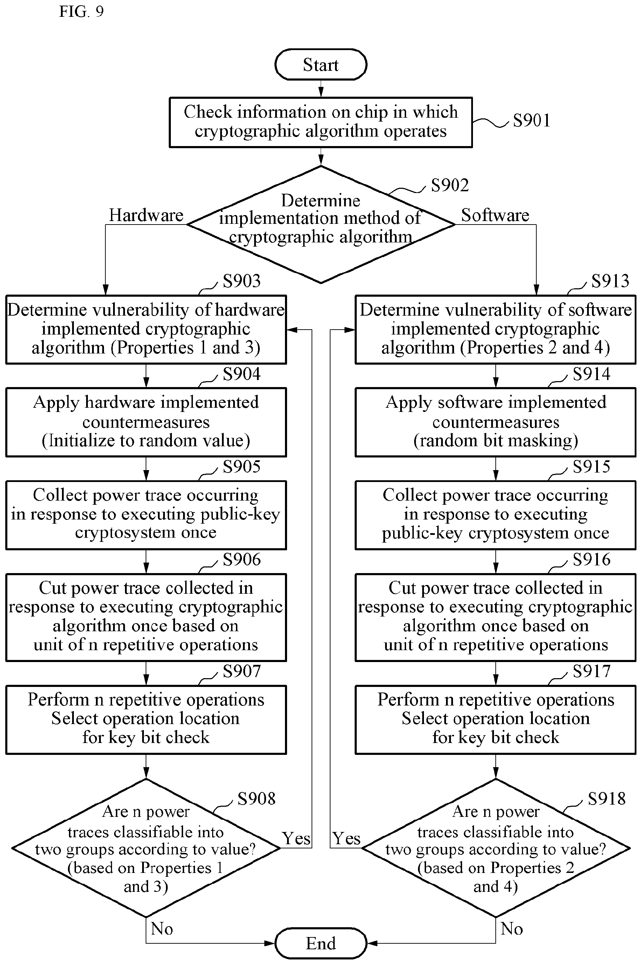

FIG. 8 is a diagram illustrating a configuration of an apparatus for randomizing key bit variables of a public-key cryptosystem according to the present disclosure, and FIG. 9 is a flowchart illustrating a method of randomizing key bit variables of a public-key cryptosystem according to the present disclosure.

An apparatus and method for randomizing key bit variables of a public-key cryptosystem according to the present disclosure may be configured to initialize a secret key bit value to a random value before starting a repetitive operation for checking the secret key bit value at a cryptographic algorithm hardware implementation.

An apparatus and method for randomizing key bit variables of a public-key cryptosystem according to the present disclosure may be configured to mask a secret key bit value with a random value in a step before performing a repetitive operation for checking the secret key bit value at a cryptographic algorithm software implementation.

The aforementioned apparatus and method for randomizing key bit variables of a public-key cryptosystem according to the present disclosure relates to side-channel analysis countermeasures, which may be a method for supplementing a vulnerability found in simple power analysis (SPA) about a public-key cryptosystem, such as, for example, Rivest-Shamir-Adleman (RSA) and Elliptic Curve Cryptography (ECC).

The above technology applies to securely design a step of checking a secret key bit $k_i$ value in n-bit secret key arrangement $k=(k_{n-1},...k_1,k_0)_2$ such that RSA, ECC algorithm may perform a repetitive operation according to a secret key bit value.

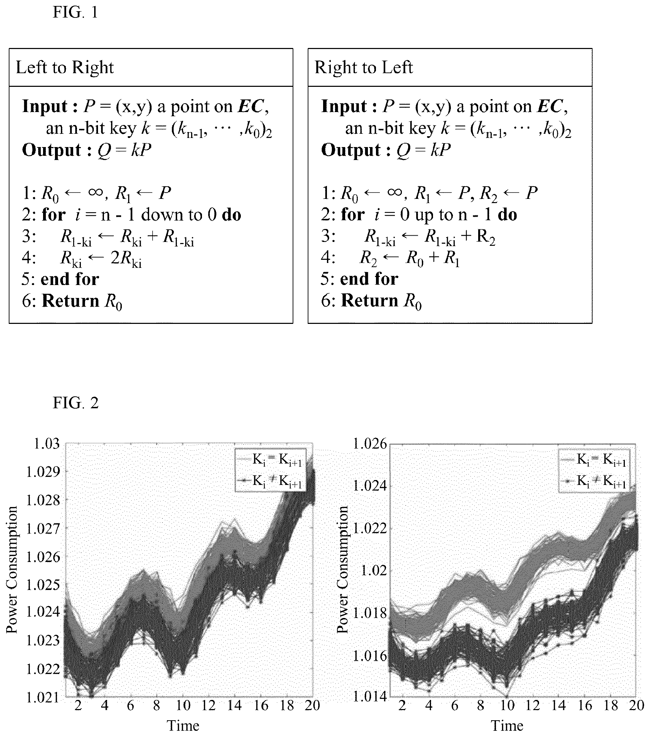

A representative operation of the ECC algorithm, that is, a Scalar multiplication operation is configured to perform a repetitive operation (2 to 5) according to the secret key bit $k_i$ value as shown in FIG. 1.

FIG. 1 illustrates a configuration of a Scalar multiplication algorithm.

Therefore, there is a of checking a secret key bit $k_i$ value before performing each repetitive operation, and the secret key bit value is extracted from the n-bit secret key arrangement $k=(k_{n-1},...k_1,k_0)_2$ and stored in $k_i$ variable.

A representative operation of the RSA algorithm, that is, a modular exponentiation operation is configured in a structure similar to the Scalar multiplication operation. For example, an addition operation is implemented as a multiplication operation and a double operation is implemented as a square operation.

Hereinafter, properties in the step of checking the secret key bit $k_i$ value of the public-key cryptosystem are described as follows:

(Property 1) Power consumption according to a Hamming distance, i.e., $k_{i+1} \oplus k_i$ value, between $k_{i+1}$ and $k_i$ ($0 \leq i < $ n-1) occurs in a step of checking a secret key bit $k_i$ value at the cryptographic algorithm hardware implementation.

$\Rightarrow$ If $k_{i+1} = k_i$, power consumption associated with $k_{i+1} \oplus k_i = 0$ occurs.

$\Rightarrow$ If $k_{i+1} \neq k_i$, power consumption associated with $k_{i+1} \oplus k_i = 1$ occurs.

(Property 2) Power consumption according to a number of 1s when a Hamming weight of $k_i$ ($0 \leq i < $ n-1), i.e., $k_i$ value is represented as a binary number occurs in a step of checking a secret key bit $k_i$ value at the cryptographic algorithm software implementation.

$\Rightarrow$ If $k_i = 0$, power consumption associated with 0 occurs.

$\Rightarrow$ If $k_i = 1$, power consumption associated with 1 occurs.

(Property 3) Power consumption according to a Hamming distance, i.e., $k_{i+1} \oplus k_i$ value, between $k_{i+1}$ and $k_i$ ($0 \leq i < $ n-1) occurs in a step of checking a secret key bit $k_i$ value at the cryptographic algorithm hardware implementation. Since an address of a register R called for the repetitive operation (2-5) is determined based on $k_{i+1}$ and $k_i$ values, power consumption according to a Hamming distance, i.e., $RegAddrR_{k_{i+1}} \oplus RegAddrR_{k_i}$ value, between register addresses RegAddrR$_{ki+1}$ and RegAddrR$_{ki}$ ($0 \leq i < $ n-1) used for an operation occurs.

$\Rightarrow$ If $k_{i+1} = k_i$, power consumption associated with $k_{i+1} \oplus k_i = 0$ and $RegAddrR_{k_{i+1}} \oplus RegAddrR_{ki} = 0$ occurs.

$\Rightarrow$ If $k_{i+1} \neq k_i$, power consumption associated with $k_{i+1} \oplus k_i = 1$ and $RegAddrR_{k_{i+1}} \oplus RegAddrR_{k_i} \neq 0$ occurs.

(Property 4) Power consumption according to a number of 1s when a Hamming weight of $k_i$ ($0 \leq i < $ n-1), i.e., $k_i$ value is represented as a binary number occurs in a step of checking a secret key bit $k_i$ value at the cryptographic algorithm software implementation. Since an address of a register R called for the repetitive operation (2-5) is determined based on $k_i$ value, power consumption according to a number of 1s when a Hamming weight of a register address RegAddrR$_{ki}$ ($0 \leq i < $ n-1) used for an operation, i.e., a RegAddrR$_{ki}$ value is represented as a binary number occurs.

$\Rightarrow$ If $k_i = 0$, power consumption associated with 0 and RegAddrR$_0$ occurs.

$\Rightarrow$ If $k_i = 1$, power consumption associated with 1 and RegAddrRi occurs.

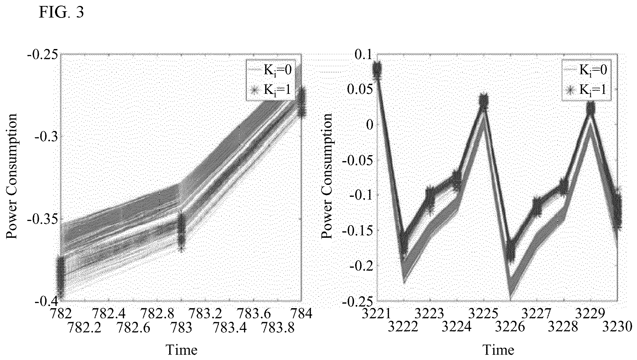

Therefore, as shown in FIGS. 2 and 3, n power traces for n repetitive operations (2-5) may be classified into two groups based on Properties 1, 2, 3, and 4. The entire n-bit secret key bits may be recovered using a single power trace. The vulnerability is present even in RSA and ECC algorithms to which simple power analysis (SPA) and differential power analysis (DPA) countermeasures apply.

FIG. 2 illustrates classification graphs in which power traces for repetitive operations at hardware implementation are classified based on properties, and FIG. 3 illustrates classification graphs in which power traces for repetitive operations at software implementation are classified based on properties.

Herein, countermeasures are designed to eliminate the vulnerability for Properties 1, 2, 3, and 4.

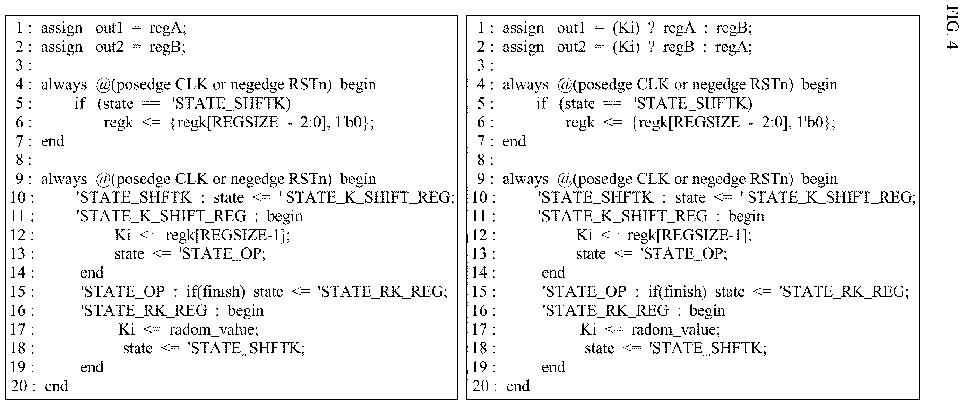

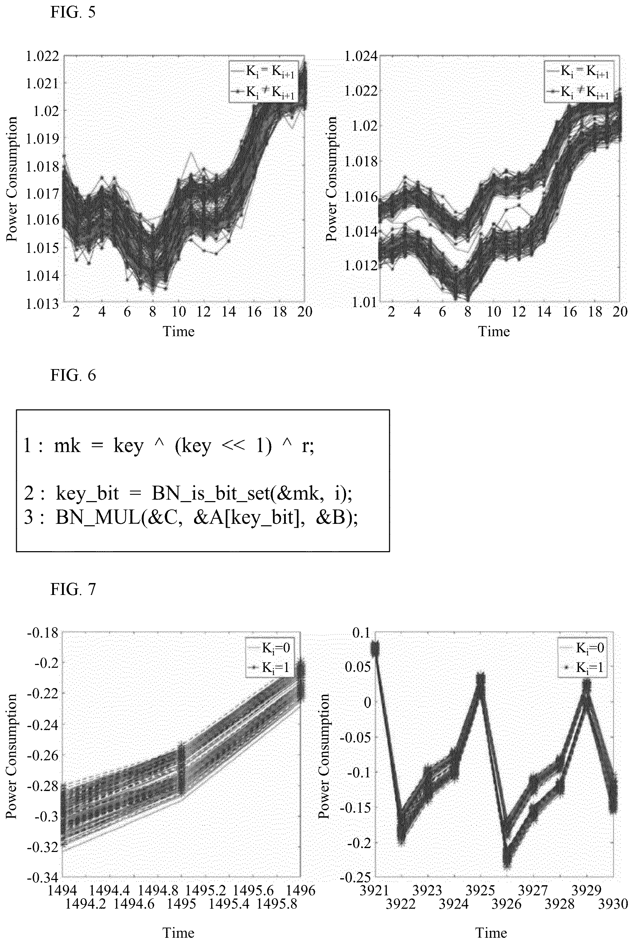

FIG. 4 illustrates a configuration of random value initialization by hardware implementation, and FIG. 5 illustrates corresponding result graphs implemented by hardware.

As shown in FIG. 4, the hardware implementation is configured to initialize $k_i$ value to a random value each time before starting a repetitive operation to eliminate Properties 1 and 3.

As a result, as shown in FIG. 5, the vulnerability may be eliminated by randomly classifying power trace properties into two groups (probability of 1/2) regardless of a property according to a secret key bit value.

FIG. 6 illustrates a configuration of random bit masking by software implementation, and FIG. 7 illustrates countermeasure result graphs implemented by software.

As shown in FIG. 6, the software implementation is configured to mask an n-bit secret key with an n-bit random value r (covered with a random value) to eliminate Properties 2 and 4.

As a result, as shown in FIG. 7, the vulnerability may be eliminated by randomly classifying power trace properties into two groups (probability of 1/2) regardless of a property according to a secret key bit value.

Hereinafter, a configuration of an apparatus and method for randomizing key bit variables of a public-key cryptosystem according to the present disclosure is further described.

Referring to FIG. 8, an apparatus for randomizing key bit variables of a public-key cryptosystem according to the present disclosure includes an information checker 80 configured to check information on a chip in which a cryptographic algorithm operates, a cryptographic algorithm determiner 900 configured to determine an implementation method of the cryptographic algorithm, a hardware countermeasure processing 100 configured to initialize a secrete key bit value to a random value each time before starting a repetitive operation for checking the secret key bit value at a cryptographic algorithm hardware implementation, and a software countermeasure processing 110 configured to mask the secret key bit value with the random value in a step before performing the repetitive operation for checking the secret key bit value at a cryptographic algorithm software implementation.

The hardware countermeasure processing 100 is configured to eliminate a vulnerability by removing Property 1 that power consumption according to a Hamming distance, $k_{i+1} \oplus k_i$ value, between $k_{i+1}$ and $k_i (0 \leq i < n-1)$ occurs in a step of checking a secret key bit $k_i$ value at the cryptographic algorithm hardware implementation and Property 3 that power consumption according to a Hamming distance, $k_{i+1} \oplus k_i$ value, between $k_{i+1}$ and $k_i$ $(0 \leq i < n-1)$ occurs in a step of checking a secret key bit $k_i$ value at the cryptographic algorithm hardware implementation and power consumption according to a Hamming distance between register addresses used for an operation occurs since an address of a register R called for the repetitive operation is determined based on $k_{i+1}$ and $k_i$ values, and by randomly classifying power trace properties into two groups regardless of a property according to a secret key bit value.

The software countermeasure processing 110 is configured to eliminate a vulnerability by removing Property 2 that power consumption according to a number of 1s when a Hamming weight of $k_i$ $(0 \leq i < n-1)$, that is, $k_i$ value is represented as a binary number occurs in a step of checking a secret key bit $k_i$ value at the cryptographic algorithm software implementation and Property 4 that power consumption according to a number of 1s when a Hamming weight of $k_i$ $(0 \leq i < n-1)$, that is, $k_i$ value is represented as a binary number occurs in a step of checking a secret key bit $k_i$ value at the cryptographic algorithm software implementation and power consumption according to a number of 1s when a register address value used for an operation is represented as a binary number, that is, a Hamming weight value of a register address occurs since an address of a register R called for a repetitive operation is determined based on $k_i$ value, and by randomly classifying power trace properties into two groups regardless of a property according to a secret key bit value.

The hardware countermeasure processing 100 includes a vulnerability determiner 100a configured to determine a vulnerability of the hardware implemented cryptographic algorithm, a random initializer 100b configured to initialize the secret key bit value to the random value before starting the repetitive operation for checking the secret key bit value by applying hardware implemented countermeasures, a power trace collector 100c configured to collect a power trace occurring in response to executing the public-key cryptosystem once, an operation unit and location selector 100d configured to cut the power trace collected in response to executing the cryptographic algorithm once based on a unit of n repetitive operations, to select an operation location for a key bit check, and to perform n repetitive operations, and a security determiner 100e configured to determine whether n power traces are classifiable into two groups according to a value and to determine that the vulnerability is eliminated if unclassified.

The software countermeasure processing 110 includes a vulnerability determiner 110a configured to determine a vulnerability of the software implemented cryptographic algorithm, a random bit masker 110b configured to perform a random bit masking by applying software implemented countermeasures, a power trace collector 110c configured to collect a power trace occurring in response to executing the public-key cryptosystem once, an operation unit and location selector 110d configured to cut the power trace collected in response to executing the cryptographic algorithm once based on a unit of n repetitive operations, to select an operation location for a key bit check, and to perform n repetitive operations, and a security determiner 110e configured to determine whether n power traces are classifiable into two groups according to a value and to determine that the vulnerability is eliminated if unclassified.

Referring to FIG. 9, a method of randomizing key bit variables of a public-key cryptosystem according to the present disclosure includes checking information on a chip in which a cryptographic algorithm operates; determining an implementation method of the cryptographic algorithm; and processing a hardware countermeasure of initializing a secrete key bit value to a random value each time before starting a repetitive operation for checking the secret key bit value at a cryptographic algorithm hardware implementation if the cryptographic algorithm is implemented on hardware, and processing a software countermeasure of masking the secret key bit value with the random value in a step before performing the repetitive operation for checking the secret key bit value at a cryptographic algorithm software implementation if the cryptographic algorithm is implemented on software.

Here, through the hardware countermeasure processing of initializing the secret key bit value to the random value each time before starting the repetitive operation, it is possible to eliminate a vulnerability by removing Property 1 that power consumption according to a Hamming distance, $k_{i+1} \oplus k_i$ value, between $k_{i+1}$ and $k_i$ $(0 \leq i < n-1)$ occurs in a step of checking a secret key bit $k_i$ value at the cryptographic algorithm hardware implementation and Property 3 that power consumption according to a Hamming distance, $k_i$ value, between $k_{i+1}$ and $k_i$ $(0 \leq i < n-1)$ occurs in a step of checking a secret key bit $k_i$ value at the cryptographic algorithm hardware implementation and power consumption according to a Hamming distance between register addresses used for an operation occurs since an address of a register R called for the repetitive operation is determined based on $k_{i+1}$ and $k_i$ values, and by randomly classifying power trace properties into two groups regardless of a property according to a secret key bit value.

Also, through the software countermeasure processing of masking the secret key bit value with the random value, it is possible to eliminate a vulnerability by removing Property 2 that power consumption according to a number of 1s when a Hamming weight of $k_i$ ($0 \leq i < n-1$), that is, $k_i$ value is represented as a binary number occurs in a step of checking a secret key bit $k_i$ value at the cryptographic algorithm software implementation and Property 4 that power consumption according to a number of 1s when a Hamming weight of $k_i$ ($0 \leq i < n-1$), that is, $k_i$ value is represented as a binary number occurs in a step of checking a secret key bit $k_i$ value at the cryptographic algorithm software implementation and power consumption according to a number of 1s when a register address value used for an operation is represented as a binary number, that is, a Hamming weight value of a register address occurs since an address of a register R called for the repetitive operation is determined based on $k_i$ value, and by randomly classifying power trace properties into two groups regardless of a property according to a secret key bit value.

In detail, information on a chip in which a cryptographic algorithm operates is checked (S901) and an implementation method of the cryptographic algorithm is determined (S902).

If the cryptographic algorithm is implemented on hardware, a vulnerability of the hardware implemented cryptographic algorithm is determined (S903) and the secret key bit value is initialized to the random value before starting the repetitive operation for checking the secret key bit value by applying hardware implemented countermeasures (S904).

A power trace occurring in response to executing the public-key cryptosystem once is collected (S905).

The power trace collected in response to executing the cryptographic algorithm once is cut based on a unit of n repetitive operations (S906). An operation location for a key bit check is selected and n repetitive operations are performed (S907).

Whether n power traces are classifiable into two groups according to a value is determined and it is determined that the vulnerability is eliminated if unclassified (S908).

If the cryptographic algorithm is implemented on software, a vulnerability of the software implemented cryptographic algorithm is determined (S913), and a random bit masking is performed by applying software implemented countermeasures (S914).

A power trace occurring in response to executing the public-key cryptosystem once is collected (S915).

The power trace collected in response to executing the cryptographic algorithm once is cut based on a unit of n repetitive operations (S916). An operation location for a key bit check is selected and n repetitive operations are performed (S917).

Whether n power traces are classifiable into two groups according to a value is determined and it is determined that the vulnerability is eliminated if unclassified (S918).

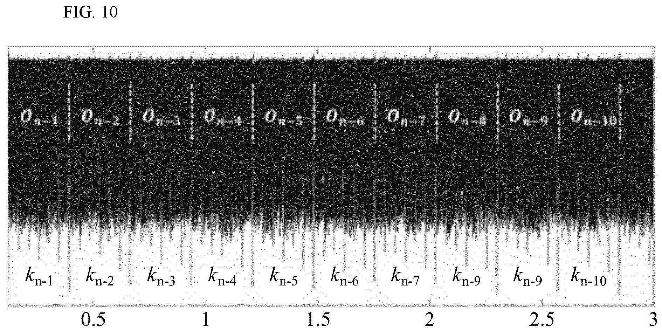

Here, an example of cutting the power trace collected in response to executing the cryptographic algorithm once based on a unit of n repetitive operations (S916) and selecting an operation location for a key bit check and performing n repetitive operations (S917) is illustrated in FIG. 10.

FIG. 10 is a graph showing a hardware power trace and a repetitive operation unit.

Hereinafter, a process of determining a vulnerability of a hardware and software implemented cryptographic algorithm is further described.

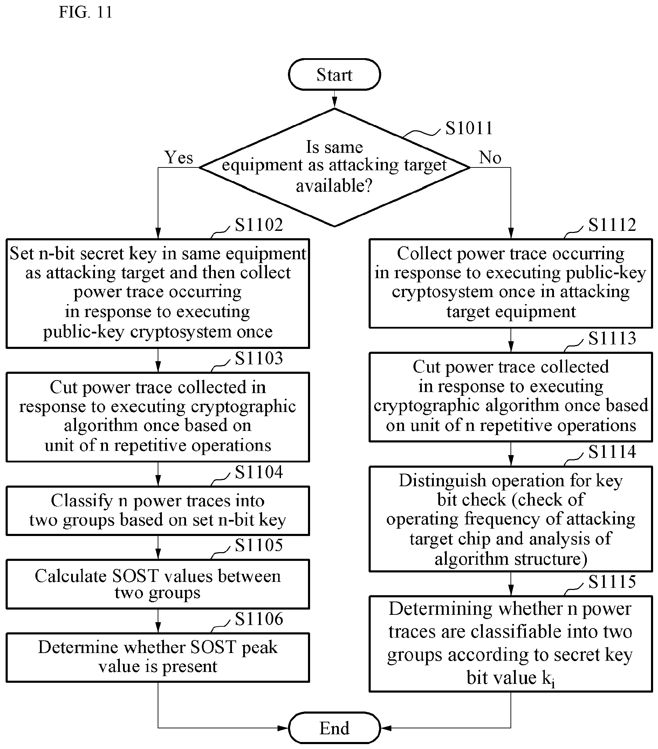

FIG. 11 is a flowchart illustrating a process of determining a vulnerability of a hardware and software implemented cryptographic algorithm.

Determining the vulnerability of the hardware and software implemented cryptographic algorithm (S913) is performed as follows.

If the same equipment as an attacking target is available (S1101), an n-bit secret key is set in the same equipment as the attacking target and then the power trace occurring in response to executing the public-key cryptosystem once is collected (S1102).

The power trace collected in response to executing the cryptographic algorithm once is cut based on a unit of n repetitive operations (S1103) and n power traces are classified into two groups based on the set n-bit key (S1104).

SOST values between the classified two groups are calculated according to the following Equation 1 (S1105) and whether an SOST peak value is present is determined (S1106).

[Equation 1]

$$SOST = \left( \frac{mG_1 - mG_2}{\sqrt{\dfrac{\sigma^2 G_1}{nG_1} + \dfrac{\sigma^2 G_2}{nG_2}}} \right)^2$$

If the same equipment as the attacking target is unavailable (S1101), the power trace occurring in response to executing the public-key cryptosystem once is collected in an attacking target equipment (S1112).

The power trace collected in response to executing the cryptographic algorithm once is cut based on a unit of n repetitive operations (S1113) and an operation for a key bit check is distinguished by checking an operating frequency of an attacking target chip and analyzing an algorithm structure (S1114).

Whether n power traces are classifiable into two groups according to a secret key bit value $k_i$ (S1115).

The aforementioned apparatus and method for randomizing key bit variables of a public-key cryptosystem according to the present disclosure refer to countermeasures for improving the security of side-channel analysis for a public-key system based on cryptographic algorithms, such as, for example, RSA and ECC. Here, since the RSA algorithm is used for an accredited certificate and the ECC algorithm is used for an electronic passport and a smart car, the countermeasure technology may apply to institutions of designing side-channel countermeasures of domestic/foreign accredited certificates, electronic passports, and smart cards, and institutions of performing side-channel security check.

As described above, it will be apparent that modifications and alterations are made to the present disclosure without departing from the spirit of the disclosure.

Therefore, the specified embodiments should be considered in terms of explanation rather than limitation and the scope of this disclosure is not defined by the description, but by the claims and their equivalents, and all variations within the scope of the claims and their equivalents are to be construed as being included in the disclosure.

Supported by National Research & Development Project

Assigned Project NO: 1711055423
Department: Ministry of Science, ICT and Future Planning
Research Management Agency: IITP
Research Business Name: Development of information security source technology (R&D) (Survey analysis division: Development of information security source technology)
Research Project Name: (ICT Lab) Development of SCR-friendly symmetric key cryptography and application mode
Contribution rate: 1/1
Host Organization: KOOKMIN UNIVERSITY Industry-Academic Cooperation Foundation
Research Period: 2017.04.01-2017.12.31

EXPLANATION OF SYMBOLS

|  |  |
|---|---|
| 80. information checker | 90. cryptographic algorithm determiner |
| 100. hardware countermeasure processing | |
| 110. software countermeasure processing | |

## Claims

1. An apparatus for randomizing key bit variables of a public-key cryptosystem, the apparatus comprising:

    an information checker configured to check information on a chip in which a cryptographic algorithm operates;
    a cryptographic algorithm determiner configured to determine an implementation method of the cryptographic algorithm;
    a hardware countermeasure processing configured to initialize a secrete key bit value to a random value each time before starting a repetitive operation for checking the secret key bit value at a cryptographic algorithm hardware implementation; and
    a software countermeasure processing configured to mask the secret key bit value with the random value in a step before performing the repetitive operation for checking the secret key bit value at a cryptographic algorithm software implementation.

2. The apparatus of claim 1, wherein the hardware countermeasure processing is configured to eliminate a vulnerability by removing a property that power consumption according to a Hamming distance, $k_{i+1} \oplus k_i$ value, between $k_{i+1}$ and $k_i (0 \leq i < n-1)$ occurs in a step of checking a secret key bit $k_i$ value at the cryptographic algorithm hardware implementation and a property that power consumption according to a Hamming distance, $k_{i+1} \oplus k_i$ value, between $k_{i+1}$

9

and $k_i$ ($0 \leq i < n-1$) occurs in a step of checking a secret key bit $k_i$ value at the cryptographic algorithm hardware implementation and power consumption according to a Hamming distance between register addresses used for an operation occurs since an address of a register R called for the repetitive operation is determined based on $k_{i+1}$ and $k_i$ values, and by randomly classifying power trace properties into two groups regardless of a property according to a secret key bit value.

3. The apparatus of claim 1, wherein the software countermeasure processing is configured to eliminate a vulnerability by removing a property that power consumption according to a Hamming weight value that is a number of 1s when a Hamming weight of $k_i$ ($0 \leq i < n-1$), that is, $k_i$ value is represented as a binary number occurs in a step of checking a secret key bit $k_i$ value at the cryptographic algorithm software implementation and a property that power consumption according to a Hamming weight value that is a number of 1s when a Hamming weight of $k_i$ ($0 \leq i < n-1$), that is, $k_i$ value is represented as a binary number occurs in a step of checking a secret key bit $k_i$ value at the cryptographic algorithm software implementation and power consumption according to a number of 1s when a Hamming weight of a register address used for an operation, that is, a register address is represented as a binary number occurs since an address of a register R called for the repetitive operation is determined based on $k_i$ value, and by randomly classifying power trace properties into two groups regardless of a property according to a secret key bit value.

4. The apparatus of claim 1 or 2, wherein the hardware countermeasure processing comprises:

   a vulnerability determiner configured to determine a vulnerability of the hardware implemented cryptographic algorithm;
   a random initializer configured to initialize the secret key bit value to the random value before starting the repetitive operation for checking the secret key bit value by applying hardware implemented countermeasures;
   a power trace collector configured to collect a power trace occurring in response to executing the public-key cryptosystem once;
   an operation unit and location selector configured to cut the power trace collected in response to executing the cryptographic algorithm once based on a unit of n repetitive operations, to select an operation location for a key bit check, and to perform n repetitive operations; and
   a security determiner configured to determine whether n power traces are classifiable into two groups according to a value and to determine that the vulnerability is eliminated if unclassified.

5. The apparatus of claim 1 or 3, wherein the software countermeasure processing comprises:

   a vulnerability determiner configured to determine a vulnerability of the software implemented cryptographic algorithm;
   a random bit masker configured to perform a random bit masking by applying software implemented countermeasures;
   a power trace collector configured to collect a power trace occurring in response to executing the public-key cryptosystem once;
   an operation unit and location selector configured to cut the power trace collected in response to executing the cryptographic algorithm once based on a unit of n repetitive operations, to select an operation location for a key bit check, and to perform n repetitive operations; and
   a security determiner configured to determine whether n power traces are classifiable into two groups according to a value and to determine that the vulnerability is eliminated if unclassified.

6. An apparatus for randomizing key bit variables of a public-key cryptosystem, the apparatus comprising:

   checking information on a chip in which a cryptographic algorithm operates;
   determining an implementation method of the cryptographic algorithm; and
   processing a hardware countermeasure of initializing a secrete key bit value to a random value each time before starting a repetitive operation for checking the secret key bit value at a cryptographic algorithm hardware implementation if the cryptographic algorithm is implemented on hardware, and processing a software countermeasure of masking the secret key bit value with the random value in a step before performing the repetitive operation for checking the secret key bit value at a cryptographic algorithm software implementation if the cryptographic algorithm is implemented on software.

7. The apparatus of claim 6, wherein, if the cryptographic algorithm is implemented on hardware, the processing comprises:

determining a vulnerability of the hardware implemented cryptographic algorithm, and initializing the secret key bit value to the random value before starting the repetitive operation for checking the secret key bit value by applying hardware implemented countermeasures;

collecting a power trace occurring in response to executing the public-key cryptosystem once;

cutting the power trace collected in response to executing the cryptographic algorithm once based on a unit of n repetitive operations, selecting an operation location for a key bit check, and performing n repetitive operations; and

determining whether n power traces are classifiable into two groups according to a value and determining that the vulnerability is eliminated if unclassified.

8. The apparatus of claim 6, wherein, if the cryptographic algorithm is implemented on software, the processing comprises:

determining a vulnerability of the software implemented cryptographic algorithm, and performing a random bit masking by applying software implemented countermeasures;

collecting a power trace occurring in response to executing the public-key cryptosystem once;

cutting the power trace collected in response to executing the cryptographic algorithm once based on a unit of n repetitive operations, selecting an operation location for a key bit check, and performing n repetitive operations; and

determining whether n power traces are classifiable into two groups according to a value and determining that the vulnerability is eliminated if unclassified.

9. The method of claim 6, wherein the processing of the hardware countermeasure of initializing the secret key bit value to the random value each time before starting the repetitive operation comprises:

eliminating a vulnerability by removing a property that power consumption according to a Hamming distance, $k_{i+1} \oplus k_i$ value, between $k_{i+1}$ and $k_i$ ($0 \leq i < n-1$) occurs in a step of checking a secret key bit $k_i$ value at the cryptographic algorithm hardware implementation and a property that power consumption according to a Hamming distance, $k_{i+1} \oplus k_i$ value, between $k_{i+1}$ and $k_i$ ($0 \leq i < n-1$) occurs in a step of checking a secret key bit $k_i$ value at the cryptographic algorithm hardware implementation and power consumption according to a Hamming distance between register addresses used for an operation occurs since an address of a register R called for the repetitive operation is determined based on $k_{i+1}$ and $k_i$ values, and by randomly classifying power trace properties into two groups regardless of a property according to a secret key bit value.

10. The method of claim 6, wherein the processing of the software countermeasure of masking the secret key bit value with the random value comprises:

eliminating a vulnerability by removing a property that power consumption according to a Hamming weight value that is a number of 1s when a Hamming weight of $k_i$ ($0 \leq i < n-1$), that is, $k_i$ value is represented as a binary number occurs in a step of checking a secret key bit $k_i$ value at the cryptographic algorithm software implementation and a property that power consumption according to a Hamming weight value that is a number of 1s when a Hamming weight of $k_i$ ($0 \leq i < n-1$), that is, $k_i$ value is represented as a binary number occurs in a step of checking a secret key bit $k_i$ value at the cryptographic algorithm software implementation and power consumption according to a number of 1s when a Hamming weight of a register address used for an operation, that is, a register address value is represented as a binary number occurs since an address of a register R called for the repetitive operation is determined based on $k_i$ value, and by randomly classifying power trace properties into two groups regardless of a property according to a secret key bit value.

11. The method of claim 8, wherein the determining the vulnerability of the hardware and software implemented cryptographic algorithm comprises:

if the same equipment as an attacking target is available,

setting an n-bit secret key in the same equipment as the attacking target and then collecting the power trace occurring in response to executing the public-key cryptosystem once;

cutting the power trace collected in response to executing the cryptographic algorithm once based on the unit of n repetitive operations and classifying n power traces into two groups based on the set n-bit key; and

calculating SOST values between the classified two groups and determining whether an SOST peak value is present.

12. The method of claim 8, wherein the determining the vulnerability of the hardware and software implemented cryptographic algorithm comprises:

if the same equipment as an attacking target is unavailable,
collecting the power trace occurring in response to executing the public-key cryptosystem once in an attacking target equipment;
cutting the power trace collected in response to executing the cryptographic algorithm once based on a unit of n repetitive operations and distinguishing an operation for a key bit check by checking an operating frequency of an attacking target chip and analyzing an algorithm structure; and
determining whether the n power traces are classifiable into two groups according to a secret key bit value ki.

FIG. 1

| Left to Right | Right to Left |
|---|---|
| **Input :** $P$ = (x,y) a point on **$EC$**,<br>    an n-bit key $k = (k_{n-1}, \cdots, k_0)_2$<br>**Output :** $Q = kP$<br><br>1: $R_0 \leftarrow \infty$, $R_1 \leftarrow P$<br>2: **for** $i$ = n - 1 down to 0 **do**<br>3:    $R_{1\text{-}ki} \leftarrow R_{ki} + R_{1\text{-}ki}$<br>4:    $R_{ki} \leftarrow 2R_{ki}$<br>5: **end for**<br>6: **Return** $R_0$ | **Input :** $P$ = (x,y) a point on **$EC$**,<br>    an n-bit key $k = (k_{n-1}, \cdots, k_0)_2$<br>**Output :** $Q = kP$<br><br>1: $R_0 \leftarrow \infty$, $R_1 \leftarrow P$, $R_2 \leftarrow P$<br>2: **for** $i$ = 0 up to n - 1 **do**<br>3:    $R_{1\text{-}ki} \leftarrow R_{1\text{-}ki} + R_2$<br>4:    $R_2 \leftarrow R_0 + R_1$<br>5: **end for**<br>6: **Return** $R_0$ |

FIG. 2

FIG. 3

FIG. 4

EP 3 726 772 A1

```
1 : assign  out1  = regA;
2 : assign  out2  = regB;
3 :
4 : always  @(posedge CLK or negedge RSTn)  begin
5 :      if  (state  ==  'STATE_SHFTK)
6 :           regk  <=  {regk[REGSIZE - 2:0], 1'b0};
7 : end
8 :
9 : always  @(posedge CLK or negedge RSTn)  begin
10 :      'STATE_SHFTK : state  <= ' STATE_K_SHIFT_REG;
11 :      'STATE_K_SHIFT_REG : begin
12 :           Ki  <=  regk[REGSIZE-1];
13 :           state  <=  'STATE_OP;
14 :      end
15 :      'STATE_OP : if(finish) state  <=  'STATE_RK_REG;
16 :      'STATE_RK_REG : begin
17 :           Ki  <=  radom_value;
18 :            state  <=  'STATE_SHFTK;
19 :      end
20 : end
```

```
1 : assign  out1  = (Ki) ? regA : regB;
2 : assign  out2  = (Ki) ? regB : regA;
3 :
4 : always  @(posedge CLK or negedge RSTn)  begin
5 :      if  (state  ==  'STATE_SHFTK)
6 :           regk  <=  {regk[REGSIZE - 2:0], 1'b0};
7 : end
8 :
9 : always  @(posedge CLK or negedge RSTn)  begin
10 :      'STATE_SHFTK : state  <= ' STATE_K_SHIFT_REG;
11 :      'STATE_K_SHIFT_REG : begin
12 :           Ki  <=  regk[REGSIZE-1];
13 :           state  <=  'STATE_OP;
14 :      end
15 :      'STATE_OP : if(finish) state  <=  'STATE_RK_REG;
16 :      'STATE_RK_REG : begin
17 :           Ki  <=  radom_value;
18 :            state  <=  'STATE_SHFTK;
19 :      end
20 : end
```

FIG. 5

FIG. 6

```
1 : mk = key ^ (key << 1) ^ r;

2 : key_bit = BN_is_bit_set(&mk, i);
3 : BN_MUL(&C, &A[key_bit], &B);
```

FIG. 7

FIG. 8

FIG. 9

```
                          ┌─────────┐
                          │  Start  │
                          └────┬────┘
                               │
                               ▼
        ┌──────────────────────────────────────────┐
        │  Check information on chip in which        │  ～ S901
        │  cryptographic algorithm operates          │
        └──────────────────────┬─────────────────────┘
                               │
                               ▼
                          S902
                    ◇ Determine ◇
   Hardware    implementation method of    Software
              cryptographic algorithm
```

| S903 | S913 |
|---|---|
| Determine vulnerability of hardware implemented cryptographic algorithm (Properties 1 and 3) | Determine vulnerability of software implemented cryptographic algorithm (Properties 2 and 4) |
| S904 | S914 |
| Apply hardware implemented countermeasures (Initialize to random value) | Apply software implemented countermeasures (random bit masking) |
| S905 | S915 |
| Collect power trace occurring in response to executing public-key cryptosystem once | Collect power trace occurring in response to executing public-key cryptosystem once |
| S906 | S916 |
| Cut power trace collected in response to executing cryptographic algorithm once based on unit of n repetitive operations | Cut power trace collected in response to executing cryptographic algorithm once based on unit of n repetitive operations |
| S907 | S917 |
| Perform n repetitive operations Select operation location for key bit check | Perform n repetitive operations Select operation location for key bit check |
| S908 | S918 |
| Are n power traces classifiable into two groups according to value? (based on Properties 1 and 3) — Yes | Are n power traces classifiable into two groups according to value? (based on Properties 2 and 4) — Yes |

No ───────────► End ◄─────────── No

FIG. 10

FIG. 11

```
                          ┌─────────┐
                          │  Start  │
                          └─────────┘
                               │
                               ▼
                         ╱─────────────╲         S1011
              Yes       ╱   Is same      ╲    No
          ◄────────────◄ equipment as attacking target ►────────┐
                        ╲   available?   ╱                       │
                         ╲─────────────╱                         │
                               │                                 │
```

| S1102 | S1112 |
|---|---|
| Set n-bit secret key in same equipment as attacking target and then collect power trace occurring in response to executing public-key cryptosystem once | Collect power trace occurring in response to executing public-key cryptosystem once in attacking target equipment |

S1103

Cut power trace collected in response to executing cryptographic algorithm once based on unit of n repetitive operations

S1113

Cut power trace collected in response to executing cryptographic algorithm once based on unit of n repetitive operations

S1104

Classify n power traces into two groups based on set n-bit key

S1114

Distinguish operation for key bit check (check of operating frequency of attacking target chip and analysis of algorithm structure)

S1105

Calculate SOST values between two groups

S1115

Determining whether n power traces are classifiable into two groups according to secret key bit value $k_i$

S1106

Determine whether SOST peak value is present

┌─────────┐
│   End   │
└─────────┘

## INTERNATIONAL SEARCH REPORT

| International application No. |
|---|
| **PCT/KR2018/015617** |

### A. CLASSIFICATION OF SUBJECT MATTER

*H04L 9/30(2006.01)i*

According to International Patent Classification (IPC) or to both national classification and IPC

### B. FIELDS SEARCHED

Minimum documentation searched (classification system followed by classification symbols)

H04L 9/30; G06F 7/58; H04L 9/00; H04L 9/14; H04L 9/20; H04L 9/28; H04W 12/00; H04W 84/12

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: random, hardware, software, subchannel analysis, attack

### C. DOCUMENTS CONSIDERED TO BE RELEVANT

| Category* | Citation of document, with indication, where appropriate, of the relevant passages | Relevant to claim No. |
|---|---|---|
| A | KR 10-2008-0016887 A (NXP B.V.) 22 February 2008<br>See claims 3, 10. | 1-12 |
| A | KR 10-2016-0020866 A (HYUNDAI AUTOEVER CORP.) 24 February 2016<br>See abstract and claim 1. | 1-12 |
| A | KR 10-0580844 B1 (ELECTRONICS AND TELECOMMUNICATIONS RESEARCH INSTITUTE) 16 May 2006<br>See claims 3, 12. | 1-12 |
| A | KR 10-1665600 B1 (KOOKMIN UNIVERSITY INDUSTRY ACADEMY COOPERATION FOUNDATION) 12 October 2016<br>See claim 1. | 1-12 |
| A | KR 10-1589185 B1 (AGENCY FOR DEFENSE DEVELOPMENT) 28 January 2016<br>See paragraphs [0012], [0021]. | 1-12 |

☐ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 12 MARCH 2019 (12.03.2019) | **12 MARCH 2019 (12.03.2019)** |

| Name and mailing address of the ISA/KR | Authorized officer |
|---|---|
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

21

**INTERNATIONAL SEARCH REPORT**
Information on patent family members

International application No.

**PCT/KR2018/015617**

| Patent document cited in search report | Publication date | Patent family member | Publication date |
|---|---|---|---|
| KR 10-2008-0016887 A | 22/02/2008 | CN 101185105 A<br>EP 1894168 A1<br>JP 2008-542894 A<br>US 2008-0260146 A1<br>WO 2006-129214 A1 | 21/05/2008<br>05/03/2008<br>27/11/2008<br>23/10/2008<br>07/12/2006 |
| KR 10-2016-0020866 A | 24/02/2016 | KR 10-1608815 B1 | 04/04/2016 |
| KR 10-0580844 B1 | 16/05/2006 | KR 10-2005-0060633 A | 22/06/2005 |
| KR 10-1665600 B1 | 12/10/2016 | NONE | |
| KR 10-1589185 B1 | 28/01/2016 | NONE | |

Form PCT/ISA/210 (patent family annex) (January 2015)

**REFERENCES CITED IN THE DESCRIPTION**

**Patent documents cited in the description**

- KR 100891323